# EUROPÄISCHE PATENTSCHRIFT

(11) **EP 1 584 944 B1**
(45) Veröffentlichungstag und Bekanntmachung des Hinweises auf die Patenterteilung: **16.07.2008**
(21) Anmeldenummer: 04008518.5
(22) Anmeldetag: 08.04.2004
(51) Int. Cl.: G01S 5/16, B25J 9/16

(54) **Bilderfassungsvorrichtung und Verfahren zur Erfassung bewegter Objekte**
Imaging device and process for detecting moving objects
Système de prise d'images et procédé de détection d'objets mobiles

(43) Veröffentlichungstag der Anmeldung: 12.10.2005
(73) Patentinhaber: FESTO AG & Co. KG, 73734 Esslingen (DE)
(72) Erfinder: Hufnagl, Herbert, Dr., 73730 Esslingen (DE); Schackenburg, Maximilian, 70176 Stuttgart (DE); Weichselbaumer, Berndt, 73732 Esslingen (DE)
(74) Vertreter: Bregenzer, Michael

(56) Entgegenhaltungen:
- EP-A- 0 152 594
- DE-A- 10 026 711
- US-A1- 2001 035 907

## Beschreibung

Die Erfindung betrifft eine Bilderfassungsvorrichtung, insbesondere für eine Handhabungsvorrichtung, zur Erfassung eines insbesondere durch einen Aktor entlang einer Bewegungsbahn bewegten Objektes, mit Erfassungsmitteln zur Zusammenwirkung mit mindestens einer Kamera zum Erfassen von Bilddaten des Objekts an mehreren Positionen der Bewegungsbahn. Die Erfindung betrifft ferner ein entsprechendes Verfahren sowie eine mit einer Bilderfassungsvorrichtung ausgestattete Handhabungsvorrichtung.

Eine derartige Bilderfassungsvorrichtung ist beispielsweise aus der DE 100 33 366 A1 bekannt. Die Bilderfassungsvorrichtung kooperiert mit einer beispielsweise zwei Achsen enthaltenden Handhabungsvorrichtung. Eine Videokamera ist auf das bewegte Objekt gerichtet und erfasst dieses an mehreren Positionen, wenn dies durch den Aktor, beispielsweise die Handhabungsvorrichtung, verlagert wird. Die Videokamera erfasst Bilddaten und übermittelt diese elektronisch an einen Steuerrechner, der die eigentliche Bilderfassungsvorrichtung bildet. Der Steuerrechner wertet die Bilddaten geometrisch aus, das heißt, er überprüft bei der Vorrichtung gemäß der DE 100 33 366, ob sich ein Objekt, dort ein Greifer, an vorbestimmten Positionen innerhalb definierter Bildbereichsausschnitte befindet.

DE 100 26 711 A1 offenbart eine Bilderfassungsvorrichtung nach dem Oberbegriff des Anspruchs 1, und ein Verfahren nach dem Oberbegriff des Anspruchs 22.

Insbesondere bei hochdynamischen Handhabungsvorgängen ist eine derartige geometrische Auswertung nicht ausreichend. Beispielsweise ist eine Situation denkbar, bei der ein von einem Greifer zu ergreifendes Objekt hin- und herschwingt und der Greifer das Objekt dann nicht zuverlässig erfassen kann, weil sich das Objekt, wenn der Greifer zugreift, nicht an dem erwarteten Ort befindet, sondern in eine Nachbarposition ausgeschwungen ist. Derartige Schwingungen treten beispielsweise bei Fördervorgängen oder durch Stöße des Greifer auf, wenn dieser zuvor z.B. ein Nachbarobjekt des Objektes ergriffen hat.

Es ist daher die Aufgabe der vorliegenden Erfindung, eine Bilderfassungsvorrichtung der eingangs genannten Art im Hinblick auf die dynamische Erfassung bewegter Objekte zu verbessern.

Bei einer Bilderfassungsvorrichtung der eingangs genannten Art ist zur Lösung der Aufgabe vorgesehen, dass sie Analysemittel zum Ermitteln von Bildanalysedaten des Objektes anhand der Bilddaten aufweist, wobei die Bildanalysedaten mindestens eine dynamische Eigenschaft des Objekts an mindestens einer Position entlang der Bewegungsbahn enthalten, wobei die Analysemittel zum Auslösen einer Folgereaktion ausgestaltet sind, wenn die mindestens eine dynamische Eigenschaft des Objekts an der mindestens einer Position von mindestens einer der Position zugeordneten Vorgabe-Eigenschaft um einen vorbestimmten Wert abweicht. Das erfindungsgemäße Verfahren geht aus einem weiteren unabhängigen Anspruch hervor.

Erfindungsgemäß erfasst die Bilderfassungsvorrichtung eine oder mehrere dynamische Eigenschaften des Objekts an einer oder mehreren Positionen entlang der Bewegungsbahn. Es ist auch möglich, dass die Bilderfassungsvorrichtung die Bewegungsbahn insgesamt oder Teilabschnitte der Bewegungsbahn hinsichtlich der dynamischen Eigenschaft des Objekts auswertet. Bei der dynamischen Eigenschaft handelt es sich beispielsweise um dessen Geschwindigkeit, dessen Beschleunigung, einen vom Objekt zurückgelegten Weg oder dergleichen. Wenn die jeweils betrachtete dynamische Eigenschaft des Objekts an dieser Prüf-Position entlang der Bewegungsbahn von einer vorbestimmten Vorgabe-Eigenschaft abweicht, ist das Objekt beispielsweise zu schnell oder zu langsam, wird es zu schnell beschleunigt oder zu stark abgebremst oder dergleichen, löst die Bilderfassungsvorrichtung eine Folgereaktion aus.

Die Folgereaktion kann verschiedene Ausgestaltungen haben, beispielsweise kann die Bilderfassungsvorrichtung eine Warnmeldung senden, eine Alarmmeldung oder auch unmittelbar eine Geschwindigkeitsveränderung für mindestens eine das Objekt bewegende Vorrichtung, beispielsweise den eingangs erläuterten Aktor und/oder die Handhabungsvorrichtung, bewirken, so dass das Objekt beispielsweise abgebremst oder gar angehalten wird. Es ist auch möglich, dass die Bilderfassungsvorrichtung die das Objekt bewegende Vorrichtung zur Einnahme einer sicheren Position anweist. Es versteht sich, dass auch mehrere Kombinationen der vorgenannten Folgereaktionen möglich sind, beispielsweise ein stufenweises Senden einer Warnmeldung. Daran kann sich eine Vorgabe einer Geschwindigkeitsänderung, beispielsweise ein Abbremsen, und schließlich ein Anhalten der das Objekt bewegenden Vorrichtung anschließen.

Besonders bevorzugt ist die Verwendung der Bilderfassungsvorrichtung im Zusammenhang mit der Automatisierungstechnik, insbesondere der Fluidtechnik. Beispielsweise bildet sie einen Bestandteil eines Handhabungssystems mit einem Aktor oder mehreren Aktoren. Diese Aktoren sind beispielsweise fluidtechnische Aktoren, insbesondere pneumatische Aktoren. Auch elektrische Aktoren, zum Beispiel elektrische Linearantriebe, oder kombinierte fluidtechnische und elektrische Antriebe, die beide Antriebskonzepte verkörpern, sind möglich.

Weitere vorteilhafte Ausgestaltungen der Erfindung ergeben sich aus den abhängigen Ansprüchen sowie aus der Beschreibung.

Als zweckmäßig hat es sich herausgestellt, eines oder mehrere Toleranzbänder zu definieren, bei deren Überschreitung eine oder mehrere Folgereaktionen ausgelöst werden. Beispielsweise ist ein Warnband definiert, bei dem die zugeordnete Folgereaktion das Erzeugen einer Warnmeldung ist. Es kann auch ein Notreaktionsband definiert sein, bei dem die Folgereaktion beispielsweise eine Geschwindigkeitsveränderung des bewegten Objektes ist.

Die erfindungsgemäße Bilderfassungsvorrichtung kann sowohl in Hardware als auch in Software bzw. durch eine Kombination aus Hard- und Software realisiert sein. Zweckmäßigerweise bildet die Bilderfassungsvorrichtung einen Bestandteil einer Kamera. Es ist auch möglich, dass eine Kamera als eine erfindungsgemäße Bilderfassungsvorrichtung ausgestaltet ist. Es ist bevorzugt, dass die Bilderfassungsvorrichtung programmierbar bzw. parametrierbar ist, wobei beispielsweise die mindestens eine Vorgabe-Eigenschaft, eines oder mehrere Toleranzbänder und/oder diesen zugeordnete Folgereaktionen programmierbar sind. Zur Programmierung kann beispielsweise eine Browser-Schnittstelle vorgesehen sein, wobei die Bilderfassungsvorrichtung eine Art Web-Server bildet.

Zweckmäßigerweise kooperiert die Bilderfassungsvorrichtung mit weiteren Sensoren, beispielsweise optische und/oder magnetische Sensoren, Drucksensoren, Wegmesssensoren oder dergleichen. Die Erfassungsmittel sind dazu ausgestaltet, von diesen Sensoren Sensordaten, beispielsweise Wegstreckendaten, Endlagensignale oder dergleichen, zu empfangen. Ferner ist es bevorzugt, dass die Erfassungsmittel die Sensoren ein- bzw. ausschalten können.

Zweckmäßigerweise löst die Bilderfassungsvorrichtung die Folgereaktion(en) in Abhängigkeit von einer oder mehreren weiteren Bedingungen aus. Beispielsweise ist eine weitere Bedingung die Geometrie der von dem Objekt durchlaufenen Bewegungsbahn, eine Korrelation zwischen Geschwindigkeit und Beschleunigung des Objekts an einer oder mehreren Positionen entlang der Bewegungsbahn oder dergleichen.

Nachfolgend wird ein Ausführungsbeispiel anhand der Zeichnung erläutert. Es zeigen:
- Fig. 1: ein fluidtechnisches Handhabungssystem mit einer Bilderfassungsvorrichtung, die einen Bestandteil einer Kamera bildet bzw. als Kamera ausgestaltet ist,
- Fig. 2: eine Rückseite mit mehreren Schnittstellen der Bilderfassungsvorrichtung gemäß Fig. 1,
- Fig. 3: eine schematische Darstellung funktionaler Komponenten der Bilderfassungsvorrichtung gemäß Fig. 1,
- Figur 4: schematische geometrische Bewegungsbahnverläufe eines durch die Handhabungsvorrichtungen gemäß Figur 1 bewegten Objekts sowie ein zugeordnetes geometrisches Toleranzband,
- Figur 5: schematische Weg-Zeit-Verläufe von Bewegungsbahnen, die ein durch die Handhabungsvorrichtungen gemäß Figur 1 bewegtes Objekt durchläuft, sowie ein zugeordnetes geometrisches Toleranzband und
- Figur 6: schematische zeitabhängige Geschwindigkeitsverläufe eines durch die Handhabungsvorrichtungen gemäß Figur 1 bewegten Objektes sowie zwei zugeordnete Toleranzbänder.

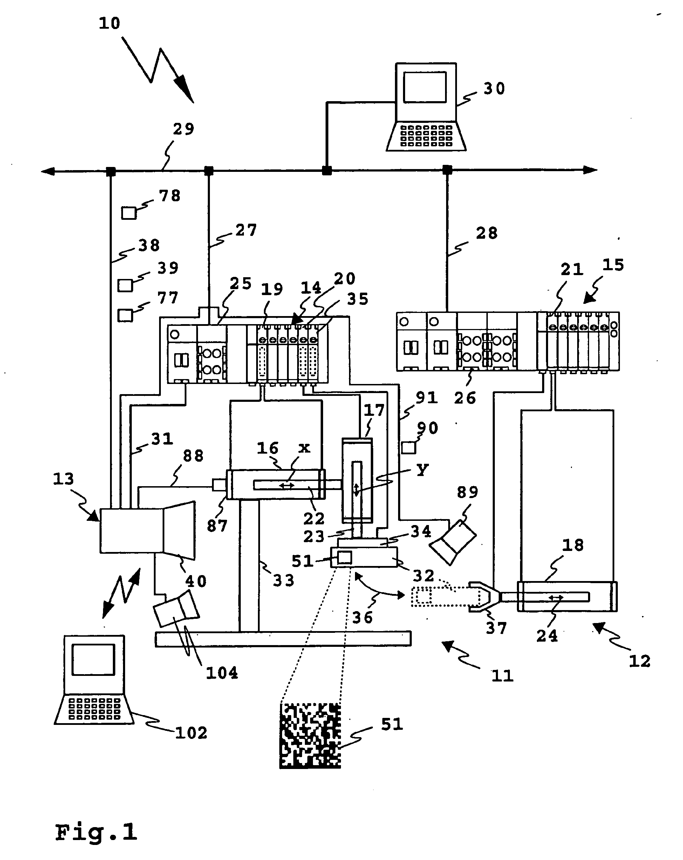

In Fig. 1 ist ein Handhabungssystem 10 mit Handhabungsvorrichtungen 11 und 12 dargestellt, die von einer erfindungsgemäßen Bilderfassungsvorrichtung 13 überwacht werden. Die Bilderfassungsvorrichtung 13 steuert zudem die Handhabungsvorrichtung 11, was später noch näher erläutert wird.

Die Handhabungsvorrichtungen 11, 12 sind lediglich schematisch dargestellte pneumatische Handhabungsvorrichtungen mit Ventilbatterien 14 und 15, die Aktoren 16, 17 bzw. 18 ansteuern. Die Aktoren 16-18 sind vorliegend pneumatische Linearantriebe. Zur Ansteuerung der Aktoren 16-18 dienen Ventilmodule 19, 20, 21, die über nicht näher bezeichnete Druckluftleitungen die Aktoren 16-18 mit Druckluft beaufschlagen bzw. Druckluft von diesen abführen, sodass Aktorglieder 22-24 der Aktoren 16-18 betätigt werden, beispielsweise aus den Gehäusen der Aktoren 16-18 ausfahren oder in diese wieder einfahren.

Die Ventilbatterien 14, 15 werden aus einer nicht dargestellten Druckluftquelle mit Druckluft gespeist. Steuerungsmodule 25, 26 steuern die Ventilbatterien 14, 15. Über Leitungen 27, 28 sind die Steuermodule 25, 26 bzw. die Ventilbatterien 14, 15 an einen zentralen Steuerbus 29, z.B. einen Ethernet-Bus, angeschlossen, über den die Steuermodule 25, 26 von einem zentralen Steuer-Rechner 30 Steuerbefehle erhalten.

Das Steuermodul 26 setzt die Befehle des Steuer-Rechners 30 in der Art einer lokalen Steuerung um, das heißt, das Steuermodul 26 ist beispielsweise in der Art einer speicherprogrammierbaren Steuerung aufgebaut.

Das Steuermodul 25 bildet einen Gateway zur Umsetzung von Steuerbefehlen des Steuer-Rechners 30 in Steuerbefehle für die Ventilmodule der Ventilbatterie 14. Zudem setzt es Steuerbefehle um, die es von der Bilderfassungsvorrichtung 13 erhält, die eine lokale Steuerung für die Handhabungsvorrichtung 11 bildet. Die Bilderfassungsvorrichtung 13 sendet Befehle über eine Leitung 31 an das Steuermodul 25 zur Ansteuerung der Ventilmodule der Ventilbatterie 14, beispielsweise der Ventilmodule 19, 20.

Die Handhabungsvorrichtungen 11 und 12 kooperieren bei der Handhabung von Objekten, beispielsweise eines Objekts 32, sowie weiterer, zur Vereinfachung nicht dargestellter Objekte, beispielsweise zu bearbeitender Werkstücke oder dergleichen.

Die Handhabungsvorrichtung 11 ist eine Mehrachs-Handhabungsvorrichtung. Der Aktor 16 ist horizontal orientiert an einem Ständer 33 angeordnet. Der Aktor 17 ist am freien, vorderen Ende des in X-Richtung betätigbaren Aktorglieds 22 des Aktors 16, beispielsweise dessen Kolbenstange, angeordnet. Am freien, unteren Ende des Aktorglieds 23 des Aktors 17 ist eine Halteeinrichtung in Gestalt eines Saugers 34 befestigt. Durch Verlagerung der Aktorglieder 22, 23 ist der Sauger 34 in X- bzw. Y-Richtung verlagerbar. Der Sauger 34 ist vorliegend mittels eines Ventilmoduls 35 betätigbar, das mit einer nicht dargestellten Vakuumerzeugungseinrichtung verbunden ist. Bei entsprechender Betätigung saugt der Sauger 34 das Objekt 32 an, wobei es vom Sauger 34 gehalten wird, oder gibt das Objekt 32 frei.

Die Handhabungsvorrichtung 11 verlagert das Objekt 32 entlang einer in Fig. 1 schematisch angedeuteten Bewegungsbahn 36 und übergibt das Objekt 32 der Handhabungsvorrichtung 12.

Die Handhabungsvorrichtung 12 ergreift das Objekt 32 mittels eines fluidtechnisch oder elektrisch betätigbaren Greifers 37, der am freien, in X-Richtung betätigbaren Aktorglied 24 des Aktors 18 vorliegend horizontal orientiert angeordnet ist.

Beim Ausführungsbeispiel sind pneumatische Linear-Antriebe dargestellt. Es versteht sich, dass auch andere Antriebsvarianten, beispielsweise elektrische Antriebe, Drehantriebe oder dergleichen möglich sind.

Der Steuer-Rechner 30 koordiniert die Bewegungsvorgänge der Handhabungsvorrichtungen 11, 12 und sendet entsprechende Steuerbefehle an diese. Zur lokalen Koordination der Handhabungsvorrichtung 11, das heißt zur Ansteuerung der Aktoren 16, 17 sowie des Saugers 34, zur Verlagerung des Objekts 32 entlang der Bewegungsbahn 36, ist die Bilderfassungsvorrichtung 13 vorgesehen, die über eine Leitung 38 vom Steuer-Rechner 30 entsprechende Steuerbefehle 39 erhalten kann.

Die Bilderfassungsvorrichtung 13 erfasst die Bewegungsbahn 36 des Objekts 32 geometrisch. Zudem erfasst die Bilderfassungsvorrichtung 13 die Bewegungsbahn 36 des Objekts 32 dynamisch, das heißt, die Bilderfassungsvorrichtung 13 analysiert eine oder mehrere dynamische Eigenschaften des Objekts 32 an einer oder mehreren Positionen der Bewegungsbahn 36, vorzugsweise auf einem Teilabschnitt der Bewegungsbahn 36 oder der Bewegungsbahn 36 insgesamt.

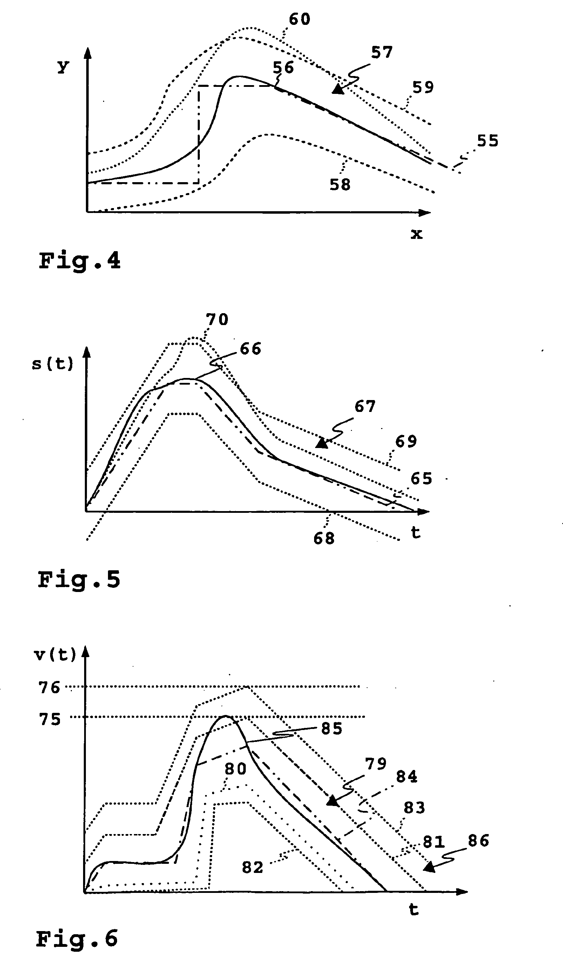

Die Bilderfassungsvorrichtung 13 ist vorliegend in Hardware und Software aufgebaut. Ein Objektiv 40 führt Licht 41 einem Bildwandler 42 zu. Der Bildwandler 42 erzeugt aus dem Licht 41 digitale Bilddaten 43, die von nachfolgend näher beschriebenen Programmmodulen ausgewertet werden, die von einem Prozessor 44 ausführbaren Programmcode enthalten. Der Prozessor 44 ist ein leistungsfähiger Bildverarbeitungsprozessor, der zusätzlich Steuerungsaufgaben für die Handhabungsvorrichtung 11 erbringen kann. Zudem ist der Prozessor 44 in der Lage, große Datenmengen zu verarbeiten. Bei der Bilderfassungsvorrichtung 13 handelt es sich nämlich vorzugsweise um eine Hochgeschwindigkeitskamera zum Erfassen von Einzelbildern mit hoher Geschwindigkeit, das heißt mit höherer Geschwindigkeit, als im Videobereich üblich ist. Im Videobereich werden üblicherweise 50 oder 60 Bilder pro Sekunde erfasst. Die Bilderfassungsvorrichtung 13 hingegen erfasst vorzugsweise 200 bis 400 Bilder pro Sekunde, wobei auch Ausführungsformen mit größerer Leistungsfähigkeit, beispielsweise 1.000 Bilder pro Sekunde, oder kleinerer Leistungsfähigkeit, beispielsweise 100 Bilder pro Sekunde, ohne weiteres möglich sind. Jedenfalls reicht die Leistungsfähigkeit der Bilderfassungsvorrichtung 13, insbesondere des Bildwandlers 42 und des Prozessors 44, zur Erfassung und Auswertung dynamischer Bewegungsvorgänge aus, die insbesondere im Zusammenhang mit den Fig. 4 bis 6 später noch erläutert werden.

Der Prozessor 44 führt Programmcode von Programmmodulen 45 aus, die beim Ausführungsbeispiel ein Analysemodul 46, ein Steuermodul 47 sowie als Visualisierungsmittel ein Visualisierungsmodul 48 enthalten. Das Analysemodul 46 bildet ein Analysemittel zum Ermitteln von Bildanalysedaten 49 anhand der Bilddaten 43 des Bildwandlers 42, der ein Erfassungsmittel zum Erfassen von Bilddaten bildet.

Das Steuermodul 47 ist ein Steuermittel zum Steuern eines oder mehrerer Aktoren, beim Ausführungsbeispiel der Aktoren 16, 17, durch entsprechende Ansteuerung der Ventilbatterie 14.

Das Visualisierungsmodul 48 erzeugt anhand der Bilddaten 43 und/oder anhand der Bildanalysedaten 49 Visualisierungsdaten 50, die z.B. eine Bewegungssequenz des Objekts 32 zeigen.

Das Analysemodul 46 analysiert die Bilddaten 43. Beispielsweise ermittelt das Analysemodul 46 anhand einer Identifizierungskennung 51, zum Beispiel einem Datamatrix-Code, einem Barcode oder dergleichen, die Identität des Objektes 32. Das Analysemodul 46 kann z.B. anhand der Bilddaten 43 auch Objektmerkmale des Objektes 32 auswerten, um die Identität des Objektes 32 zu ermitteln. Die Identifizierungskennung 51 signalisiert beispielsweise eine Seriennummer, eine Qualitätseigenschaft oder dergleichen des Objekts 32. Die Bilderfassungsvorrichtung 13 verfolgt die Bewegungsbahn 36 des Objekts 32 anhand der Identifizierungskennung 51. Ferner ist es möglich, dass das Analysemodul 46 auch weitere Eigenschaften des Objekts 32, insbesondere Geometrie-Eigenschaften des Objekts 32, analysiert. Solche Geometrie-Eigenschaften sind beispielsweise die Lage und/oder die Ausrichtung des Objekts 32. Das Analysemodul 46 analysiert ferner den geometrischen Verlauf der Bewegungsbahn 36.

Ein geometrisch idealer Verlauf 55 ist schematisch in Fig. 4 dargestellt. Durch eine entsprechende Überlagerung der Bewegungen der Aktoren 16, 17 stellt sich jedoch in der Praxis ein typischer geometrischer Verlauf 56 ein. Die Verläufe 55, 56 befinden sich innerhalb eines geometrischen Toleranzbandes 57, das durch einen unteren und oberen Grenzverlauf 58, 59 begrenzt ist.

Die in den Fig. 4 bis 6 dargestellten Verläufe sind schematisch. Die Verläufe können die Bewegungsbahn 36 im Ganzen, aber auch unterschiedliche Teilabschnitte betreffen.

Sofern der geometrische Verlauf der Bewegungsbahn 36 sich innerhalb des geometrischen Toleranzbandes 57 befindet, löst das Analysemodul 46 keine Folgereaktion aus bzw. signalisiert dem Steuermodul 47, dass das Objekt 32 in der gewünschten Weise bewegt wird. Wenn jedoch der geometrische Verlauf der Bewegungsbahn 36 sich außerhalb des Toleranzbandes 57 befindet, wie beispielsweise beim geometrischen Verlauf 60 der Bewegungsbahn 36, erzeugt das Analysemodul 46 eine Warn-Information 61, um dem Steuermodul 47 zu signalisieren, dass das Objekt 32 nicht in der vorbestimmten Weise bewegt wird. Das Steuermodul 47 erzeugt dann beispielsweise entsprechende Steuerbefehle an die Aktoren 16 und/oder 17, damit das Objekt 32 in der gewünschten Weise bewegt wird oder damit die Aktoren 16, 17 angehalten werden, um beispielsweise eine Kollision mit einem Hindernis zu vermeiden.

Über eine geometrische Bilddatenanalyse hinaus leistet das Analysemodul 46 jedoch weitere Funktionen. Es analysiert mindestens eine dynamische Eigenschaft des Objekts 32 an einer oder mehreren Positionen entlang der Bewegungsbahn 36, was nachfolgend anhand des Weg-Zeit-Diagramms gemäß Fig. 5 erläutert wird.

Fig. 5 zeigt in strichpunktierter Linie einen idealisierten zeitlichen Verlauf eines Weges, den das Objekt 32 bei einer Bewegung entlang der Bewegungsbahn 36 durchläuft. Typischerweise jedoch bewegen die Aktoren 16, 17 das Objekt 32 in einem Weg-Zeit-Verlauf 66, der mit durchgezogener Linie dargestellt ist und sich innerhalb eines Toleranzbandes 67 befindet, das durch einen unteren und einen oberen Grenzverlauf 68, 69 begrenzt ist. Beispielsweise durch eine Fehlbetätigung der Aktoren 16, 17 oder aus einem sonstigen Grund ist es aber möglich, dass das Objekt 32 einen Fehler-Weg-Verlauf 70 durchläuft, der das Toleranzband 57 nach oben hin durchstößt. Auch in diesem Fall erzeugt das Analysemodul 46 als Folgereaktion die Warn-Information 61, um dem Steuermodul 47 einen Fehlerfall anzuzeigen.

Bei der Handhabungsvorrichtung 11 ist ferner vorbestimmt, dass das Objekt 32 beim Durchlaufen der Bewegungsbahn 36 als dynamische Eigenschaft eine Alarm-Geschwindigkeit 75 nicht überschreiten soll, bei der das Analysemodul 46 eine Alarm-Meldung 77 an das Steuermodul 47 und den Steuer-Rechner 30 sendet. Ferner darf das Objekt 32 eine Not-Geschwindigkeit 76 nicht überschreiten. In diesem Fall sendet das Analysemodul 46 eine Not-Meldung 78 an das Steuermodul 47 und/oder den Steuer-Rechner 30, sodass das Steuermodul 47 die Aktoren 16, 17 und der Steuer-Rechner 30 die Handhabungsvorrichtung 12 sofort anhält.

Die Alarm-Geschwindigkeit 75 sowie die Not-Geschwindigkeit 76 bilden Bestandteile eines oberen Alarm-Grenzverlaufs 81 bzw. eines oberen Not-Grenzverlaufs 83, die mit einem unteren Alarm-Grenzverlauf 80 sowie einem unteren Not-Grenzverlauf 82 ein Geschwindigkeits-Alarm-Toleranzband 79 bzw. ein Geschwindigkeits-Not-Toleranzband 86 begrenzen.

Idealerweise hat das Objekt 32 entlang der Bewegungsbahn 36 einen typischen Geschwindigkeitsverlauf 85. In der Realität jedoch werden Geschwindigkeitsverläufe zu beobachten sein, die von diesem idealen Geschwindigkeitsverlauf 84 abweichen, sich aber innerhalb des Alarm-Toleranzbandes 79 bewegen. In diesem Fall erzeugt das Analysemodul 46 keine Folgereaktion bzw. meldet an den zentralen Steuer-Rechner 30 eine korrekte Funktion der Handhabungsvorrichtung 11.

Allerdings ist es auch möglich, dass beispielsweise ein Fehler-Geschwindigkeitsverlauf 85 auftritt, bei dem das Objekt 32 beispielsweise zu schnell bewegt wird. In diesem Fall erzeugt das Analysemodul 46 die Alarm-Meldung 77.

Wenn der Geschwindigkeitsverlauf 85 auch das Not-Toleranzband 86 verlässt, das Objekt 32 beispielsweise schneller als die Not-Geschwindigkeit 76 bewegt wird, weicht die dynamische Eigenschaft des Objekts 32 in dieser Hinsicht von der Vorgabe-Eigenschaft "Not-Geschwindigkeit 76 darf nicht überschritten werden" ab, wobei das Analysemodul 46 bzw. das Steuermodul 47 dann die Handhabungsvorrichtung 11 anhalten und zweckmäßigerweise eine entsprechende Warnmeldung an den Steuer-Rechner 30 senden kann. Der Steuer-Rechner 30 instruiert in diesem Fall zweckmäßigerweise auch die Handhabungsvorrichtung 12 zum Anhalten und sendet einen entsprechenden Steuerbefehl an das Steuermodul 26 der Ventilbatterie 15.

Es versteht sich, dass das Analysemodul 46 bei der Analyse dynamischer Eigenschaften des Objekts 32 auch weitere Bedingungen prüfen kann, beispielsweise die Identifizierungskennung oder den Identifizierungscode 51. Beispielsweise können für unterschiedliche Objekte, die die Handhabungsvorrichtung 11 bewegt, unterschiedliche dynamische Eigenschaften, beispielsweise unterschiedliche Alarm-Geschwindigkeitstoleranzbäder und Not-Geschwindigkeitstoleranzbänder, definiert sein.

Es ist auch möglich, dass das Analysemodul 46 eine Korrelation verschiedener Eigenschaften, dynamischer oder nichtdynamischer Eigenschaften, des Objekts 32 oder anderer, von der Handhabungsvorrichtung 11 bewegter Objekte zur Erzeugung einer Folgereaktion auswertet, beispielsweise die Überschreitung einer Grenz-Geschwindigkeit und, was in den Figuren nicht dargestellt ist, die Überschreitung einer Grenz-Beschleunigung des jeweiligen Objekts entlang seiner durch die Handhabungsvorrichtung 11 beeinflussten Bewegungsbahn.

Ferner ist es möglich, dass die Bilderfassungsvorrichtung 13 beispielsweise auch Sensordaten externer Sensoren auswertet. Beispielsweise sendet ein Positionssensor 87 am Aktor 16 ein Positionssignal 88 an die Bilderfassungsvorrichtung 13. Im Positionssignal 88 ist die Position des Aktorglieds 22 angegeben. Das Positionssignal 88 kann beispielsweise die jeweilige Endlage des Aktorglieds 22 und/oder ein Wegstreckensignal enthalten. Das Analysemodul 46 korreliert beispielsweise den Geschwindigkeits-Zeitverlauf des Objekts 32 entlang der Bewegungsbahn 36 mit dem Positionssignal 88 und sendet die Alarm-Meldung 77 beispielsweise dann, wenn eine vorbestimmte Geschwindigkeit des Aktorglieds 22 an einer vorbestimmten Position entlang des Verstellweges des Aktorglieds 22 überschritten ist.

Die Bilderfassungsvorrichtung 13 kann sozusagen im Standalone-Betrieb betrieben werden. Es ist aber auch möglich, eine oder mehrere weitere Kameras an die Bilderfassungsvorrichtung 13 anzuschließen, beispielsweise eine Kamera 89. Die Kamera 89 erzeugt Bilddaten 90 und übermittelt diese über eine Leitung 91 an die Bilderfassungsvorrichtung 13. Die Bilderfassungsvorrichtung 13 analysiert die Bilddaten 90 zweckmäßigerweise in derselben Weise wie die vom Bildwandler 42 erzeugten Bilddaten 43, wobei beispielsweise das Analysemodul 46 die Bilddaten 90 analysiert. Die Bilderfassungsvorrichtung 13 kann Steuersignale, beispielsweise zum Verschwenken, zum Verändern des Bildausschnitts oder dergleichen, an die Kamera 89 senden.

Ein Speicher 92 der Bilderfassungsvorrichtung 13 dient zum Speichern des Programmcodes der Programmmodule 45. Ferner dient er als Arbeitsspeicher für den Prozessor 44. Zusätzlich ermöglich der Speicher 92 eine Langzeitspeicherung von Bilddaten und/oder Bildanalysedaten. Üblicherweise werden in dem Speicher 92 Bilddaten 43 bzw. Bilddaten 90 in der Art eines FIFO-Speichers abgelegt, das heißt, es werden die jeweils aktuellen Daten im Speicher 92 gespeichert und ältere Daten gelöscht. Es ist aber möglich, im Speicher 92 auch für längere Zeit Daten abzulegen, beispielsweise in einem Langzeit-Speicherbereich 93. Das Analysemodul 46 speichert beispielsweise Bilddaten 43 in Gestalt einer Bildsequenz oder dergleichen und/oder Bildanalysedaten 49 in dem Langzeit-Speicherbereich 93, wenn eine kritische Situation aufgetreten ist, die beispielsweise zum Senden einer Alarm-Meldung oder gar zum Notabschalten der Handhabungsvorrichtung 11 geführt hat. Aus dem Langzeit-Speicherbereich 93 können diese Daten dann später ausgelesen werden, beispielsweise um die Fehlersituation genauer zu analysieren. An dieser Stelle sei festgehalten, dass die Bilderfassungsvorrichtung 13 für schnelle Bewegungsvorgänge geeignet ist, das heißt sie kann sozusagen in Zeitlupe Bildsequenzen erfassen und zu späteren Analyse wieder ausgeben.

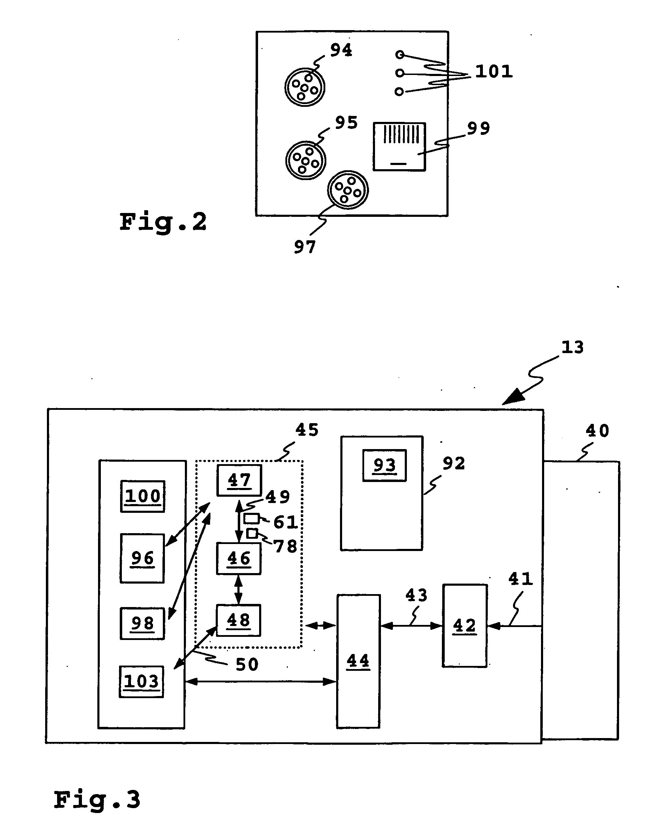

In Fig. 2 ist die Rückseite der Bilderfassungsvorrichtung 13 gezeigt, an der diverse Schnittstellen bzw. Signalisierungselemente vorhanden sind. Beispielsweise dient ein Steckanschluss 94 zur elektrischen Stromversorgung der Bilderfassungsvorrichtung 13. Ein weiterer Steckanschluss 95 ist für die Verbindung mit einer anzusteuernden unterlagerten Ein-Ausgabe-Einheit, im vorliegenden Fall zum Anschluss der Ventilbatterie 14 bzw. deren Steuermodul 25, vorgesehen. Der Steckanschluss 95 ist eine Feldbus-Schnittstelle, an die neben dem Steuermodul 25 auch weitere Busteilnehmer, die von der Bilderfassungsvorrichtung 13 steuerbar sind, anschließbar sind. Der Steckanschluss 95 ist mit einem Bus-Controller 96 elektrisch verbunden. Ein weiterer elektrischer Anschluss 97, dem beispielsweise eine Digital-Analogwandleranordnung 98 zugeordnet ist, eignet sich für den Anschluss externer Ein- und Ausgabeelemente, beispielsweise zum Anschluss des Sensors 87. Die Schnittstellenmittel bzw. Anschlüsse der Bilderfassungsvorrichtung 13 sind zweckmäßigerweise in einer hohen Schutzart, beispielsweise IP 65/67, ausgelegt.

Ein Ethernet-Controller 100 bedient einen Ethernet-Anschluss 99, an den die Bus-Leitung 38 des Steuer-Busses 29 anschließbar ist.

Anzeigemittel 101, beispielsweise LEDs, dienen zur Signalisierung von Betriebszuständen der Bilderfassungsvorrichtung 13, beispielsweise von Normalbetrieb, Alarm oder Not-Aus.

Es versteht sich, dass neben der beschriebenen kabelgebundenen Verbindung mit der Bilderfassungsvorrichtung 13 auch drahtlose Varianten ohne weiteres möglich sind, beispielsweise eine drahtlose Verbindung zu einer Parametrierungs-und/oder Visualisierungsvorrichtung 102. Bei der Visualisierungs-Parametrierungsvorrichtung 102 handelt es sich beispielsweise um ein Notebook, zu dem die Bilderfassungsvorrichtung 13 mit Hilfe eines Funk-Controllers 103 eine drahtlose Verbindung, beispielsweise eine Bluetooth-Verbindung, WLAN-Verbindung (Wireless LAN) oder dergleichen, aufbauen kann. Mit Hilfe der Parametrierungsvorrichtung 102 können Parameter, beispielsweise die Alarm-Geschwindigkeit 75 oder die Not-Geschwindigkeit 76, an die Bilderfassungsvorrichtung 13 übermittelt werden, die in dem Speicher 92 abgelegt werden. Es ist auch möglich, beispielsweise Prüfprogramme, Steuerprogramme oder dergleichen über diese Schnittstelle auf die Bilderfassungsvorrichtung 13 zu laden, beispielsweise einen Steuer-Ablauf für das Steuermodul 47, ein Analyseprogramm für das Analysemodul 46 oder dergleichen.

Das Visualisierungsmodul 48 dient zur Visualisierung von Bilddaten und/oder Bildanalysedaten. Das Visuälisierungsmodul 48 ist vorliegend in der Gestalt eines Web-Servers aufgebaut, der beispielsweise die Visualisierungsdaten 50 eingebettet in HTML-Code an die Visualisierungsvorrichtung 102 übermittelt (HTML = Hypertext Markup Language). Es ist auch möglich, dass das Visualisierungsmodul 48 Alarmmeldungen, Warnmeldungen oder das Abschalten der Handhabungsvorrichtung 11 an die Visualisierungsvorrichtung 102 sendet.

Die Bilderfassungsvorrichtung kann auch weitere Aufgaben erfüllen, beispielsweise die Ausrichtung, die Größe, die Lage, die Oberfläche oder dergleichen des Objekts 32 erkennen. Ferner kann die Bilderfassungsvorrichtung 13 auch eine eindeutige Teilekennung des Objekts 32 anhand des Identifizierungscodes 51 ermitteln. Auch eine Abstandsprüfung bzw. Abstandsvermessung ist mit Hilfe der Bilderfassungsvorrichtung 13 möglich, beispielsweise kann der jeweilige Abstand des Objekts 32 vom Greifer 37 durch die Bilderfassungsvorrichtung 13 gemessen werden, wobei die Bilderfassungsvorrichtung 13 beispielsweise die Bilddaten 90 der Kamera 89 auswertet. Ferner kann die Bilderfassungsvorrichtung 13 auch Beleuchtungen ein-und ausschalten, beispielsweise eine Leuchte 104.

## Patentansprüche

1. Bilderfassungsvorrichtung zur Erfassung eines durch einen Aktor (16, 17) entlang einer Bewegungsbahn (36) bewegten Objektes (32) mit:
- Erfassungsmitteln zur Zusammenwirkung mit mindestens einer Kamera zum Erfassen von Bilddaten (43) des Objekts (32) an mehreren Positionen der Bewegungsbahn (36),
- Analysemittel (46) zum Ermitteln von Bildanalysedaten (49) des Objektes (32) anhand der Bilddaten (43), wobei die Bildanalysedaten (49) mindestens eine Eigenschaft des Objekts (32) an mindestens einer Position entlang der Bewegungsbahn (36) enthalten, wobei die Analysemittel (46) zum Auslösen einer Folgereaktion ausgestaltet sind, wenn die mindestens eine Eigenschaft des Objekts (32) an der mindestens einer Position von mindestens einer der Position zugeordneten Vorgabe-Eigenschaft (75, 76) um einen vorbestimmten Wert abweicht, **dadurch gekennzeichnet, dass** die mindestens eine Eigenschaft des Objekts eine dynamische Eigenschaft ist, und die Bildanalysedaten mindestens eine dynamische Eigenschaft des Objekts an mindestens einer Position entlang der Bewegungsbahn enthalten, wobei die mindestens eine dynamische Eigenschaft des Objekts (32) dessen Geschwindigkeit und/oder dessen Beschleunigung umfasst.

2. Bilderfassungsvorrichtung nach Anspruch 1, **dadurch gekennzeichnet, dass** die Folgereaktion ein Erzeugen einer Warnmeldung und/oder einer Alarmmeldung und/oder eine Geschwindigkeitsveränderung, mindestens einer das Objekt (32) bewegenden Vorrichtung umfasst.

3. Bilderfassungsvorrichtung nach Anspruch 1 oder 2, **dadurch gekennzeichnet, dass** die mindestens eine Vorgabe-Eigenschaft (75, 76) mindestens ein Toleranzband begrenzt, bei dessen Überschreitung die Folgereaktion ausgelöst wird.

4. Bilderfassungsvorrichtung nach Anspruch 3, **dadurch gekennzeichnet, dass** das mindestens eine Toleranzband ein Warnband (57), bei dem die Folgereaktion ein Erzeugen einer Warnmeldung (61) ist, und/oder ein Alarmband (79), bei dem die Folgereaktion ein Erzeugen einer Alarmmeldung (77) ist, und/oder ein Notreaktionsband (86) umfasst, bei dem die Folgereaktion eine Geschwindigkeitsveränderung einer Vorrichtung, insbesondere ein Anhalten oder ein Positionieren der Vorrichtung in eine sichere Stellung, ist.

5. Bilderfassungsvorrichtung nach einem der vorhergehenden Ansprüche, **dadurch gekennzeichnet, dass** sie programmierbar ist.

6. Bilderfassungsvorrichtung nach einem der vorhergehenden Ansprüche, **dadurch gekennzeichnet, dass** die Erfassungsmittel zum Erfassen von Sensordaten (88) ausgestaltet sind.

7. Bilderfassungsvorrichtung nach einem der vorhergehenden Ansprüche, **dadurch gekennzeichnet, dass** die Analysemittel (46) zum Auslösen der Folgereaktion in Abhängigkeit von mindestens einer weiteren Bedingung ausgestaltet sind.

8. Bilderfassungsvorrichtung nach Anspruch 7, **dadurch gekennzeichnet, dass** die mindestens eine weitere Bedingung eine Abweichung einer Geometrieeigenschaft des Objekts (32) von einer Vorgabe-Geometrieeigenschaft (75, 76) umfasst.

9. Bilderfassungsvorrichtung nach Anspruch 7 oder 8, **dadurch gekennzeichnet, dass** die mindestens eine weitere Bedingung einen Identifizierungscode (51) des Objekts (32) umfasst.

10. Bilderfassungsvorrichtung nach einem der Ansprüche 7 bis 9, **dadurch gekennzeichnet, dass** die Analysemittel (46) zum Ermitteln der mindestens einen weiteren Bedingung anhand von Sensordaten ausgestaltet ist.

11. Bilderfassungsvorrichtung nach einem der vorhergehenden Ansprüche, **dadurch gekennzeichnet, dass** sie Anschlussmittel für eine Visualisierungsvorrichtung aufweist und/oder Visualisierungsmittel (48) enthält.

12. Bilderfassungsvorrichtung nach einem der vorhergehenden Ansprüche, **dadurch gekennzeichnet, dass** die mindestens eine Kamera einen Bestandteil der Bilderfassungsvorrichtung (13) bildet oder dass sie als die Kamera ausgestaltet ist.

13. Bilderfassungsvorrichtung nach einem der vorhergehenden Ansprüche, **dadurch gekennzeichnet, dass** die mindestens eine Kamera eine Hochgeschwindigkeitskamera zum Erfassen von mindestens 45 Einzelbildern pro Sekunde ist.

14. Bilderfassungsvorrichtung nach einem der vorhergehenden Ansprüche, **dadurch gekennzeichnet, dass** sie zur synchronen Steuerung mindestens einer externen Kamera (89) ausgestaltet ist.

15. Bilderfassungsvorrichtung nach einem der vorhergehenden Ansprüche, **dadurch gekennzeichnet, dass** sie mindestens eine Schnittstelle zur Kommunikation mit einer übergeordneten Steuerungsvorrichtung aufweist.

16. Bilderfassungsvorrichtung nach einem der vorhergehenden Ansprüche, **dadurch gekennzeichnet, dass** sie Steuerungsmittel zur Steuerung mindestens eines unterlagerten Aktors aufweist.

17. Bilderfassungsvorrichtung nach einem der vorhergehenden Ansprüche, **dadurch gekennzeichnet, dass** sie Speichermittel (93) zur Speicherung der Bilddaten (43) aufweist.

18. Bilderfassungsvorrichtung nach Anspruch 17, **dadurch gekennzeichnet, dass** die Speichermittel zur Langzeit-Speicherung in Abhängigkeit von einer Auslösebedingung ausgestaltet sind.

19. Bilderfassungsvorrichtung nach einem der vorhergehenden Ansprüche, **dadurch gekennzeichnet, dass** sie durch einen Prozessor ausführbaren Programmcode enthält.

20. Speichermittel mit einer Bilderfassungsvorrichtung nach Anspruch 19.

21. Handhabungssystem (10) mit mindestens einer Bilderfassungsvorrichtung nach einem der Ansprüche 1 bis 19.

22. Verfahren zur Erfassung eines durch einen Aktor entlang einer Bewegungsbahn (36) bewegten Objektes (32) mittels mindestens einer Bilderfassungseinrichtung, mit den Schritten:
- Erfassen von Bilddaten (43) des Objekts (32) mit mindestens einer Kamera an mehreren Positionen der Bewegungsbahn (36),
**gekennzeichnet durch**,
- Ermitteln von Bildanalysedaten (49) des Objektes (32) anhand der Bilddaten (43) **durch** Analysemittel (46), wobei die Bildanalysedaten (49) mindestens eine Eigenschaft des Objekts (32) an mindestens einer Position entlang der Bewegungsbahn (36) enthalten, und
- Auslösen einer Folgereaktion **durch** die Analysemittel (46), wenn die mindestens eine Eigenschaft des Objekts (32) an der mindestens einer Position von mindestens einer der Position zugeordneten Vorgabe-Eigenschaft (75, 76) um einen vorbestimmten Wert abweicht, wobei die mindestens eine Eigenschaft des Objekts eine dynamische Eigenshaft ist, und die Bildanalysedaten mindestens eine dynamische Eigenschaft des Objekts an mindestens einer Position entlang der Bewegungsbahn enthalten, wobei die mindestens eine dynamische Eigenschaft des Objekts (32) dessen Geschwindigkeit und/oder dessen Beschleunigung umfasst.

## Claims

1. Image acquisition device for the detection of an object (32) moved along a path of motion (36) by an actuator (16, 17), comprising:
- acquisition means acting together with at least one camera for the acquisition of image data (43) of the object (32) at several point of the path of motion (36),
- analysing means (46) for obtaining image analysis data (49) of the object (32) using the image data (43), wherein the image analysis data (49) include at least one characteristic of the object (32) in at least one position along the path of motion (36), wherein the analysing means (46) are designed to trigger a consecutive reaction if the at least one characteristic of the object (32) in the at least one position deviates by a preset amount from at least one preset characteristic (75, 76) assigned to that position, **characterised in that** the at least one characteristic of the object is a dynamic characteristic and the image analysis data include at least one dynamic characteristic of the object in at least one position along the path of motion, wherein the at least one dynamic characteristic of the object (32) comprises its speed and/or its acceleration.

2. Image acquisition device according to claim 1, **characterised in that** the consecutive reaction comprises the generation of a warning and/or an alarm and/or a speed change of at least one device moving the object (32).

3. Image acquisition device according to claim 1 or 2, **characterised in that** the at least one preset characteristic (75, 76) delimits at least one tolerance band and the consecutive reaction is triggered if this is exceeded.

4. Image acquisition device according to claim 3, **characterised in that** the at least one tolerance band comprises a warning band (57) with the consecutive reaction being a generation of a warning (61) and/or an alarm band (79) with the consecutive reaction being a generation of an alarm (77) and/or an emergency reaction band (86) with the consecutive reaction being a speed change of a device, in particular a stopping or positioning of the device in a safe position.

5. Image acquisition device according to any of the preceding claims, **characterised in that** it is programmable.

6. Image acquisition device according to any of the preceding claims, **characterised in that** the acquisition means are designed for the acquisition of sensor data (88).

7. Image acquisition device according to any of the preceding claims, **characterised in that** the analysing means (46) are designed for triggering the consecutive reaction in dependence on at least one further condition.

8. Image acquisition device according to claim 7, **characterised in that** the at least one further condition comprises a deviation of a geometrical characteristic of the object (32) from a preset geometrical characteristic (75, 76).

9. Image acquisition device according to claim 7 or 8, **characterised in that** the at least one further condition comprises an identifying code (51) of the object (32).

10. Image acquisition device according to any of claims 7 to 9, **characterised in that** the analysing means (46) are designed for determining the at least one further condition using sensor data.

11. Image acquisition device according to any of the preceding claims, **characterised in that** it includes connecting means for a visualisation device and/or visualisation means (48).

12. Image acquisition device according to any of the preceding claims, **characterised in that** the at least one camera is a part of the image acquisition device (13) or **in that** the image acquisition device is designed as the camera.

13. Image acquisition device according to any of the preceding claims, **characterised in that** the at least one camera is a high-speed camera for producing at least 45 single frames per second.

14. Image acquisition device according to any of the preceding claims, **characterised in that** it is designed for the synchronous control of at least one external camera (89).

15. Image acquisition device according to any of the preceding claims, **characterised in that** it comprises at least one interface for communication with a higher-order control unit.

16. Image acquisition device according to any of the preceding claims, **characterised in that** it comprises control means for the control of at least one subordinated actuator.

17. Image acquisition device according to any of the preceding claims, **characterised in that** it comprises memory means (93) for the storage of the image data (43).

18. Image acquisition device according to claim 17, **characterised in that** the memory means are designed for long-term storage in dependence on a trigger condition.

19. Image acquisition device according to any of the preceding claims, **characterised in that** it includes a programme code executable by a processor.

20. Memory means with an image acquisition device according to claim 19.

21. Handling system (10) with at least one image acquisition device according to any of claims 1 to 19.

22. Method for the detection of an object (32) moved along a path of motion (36) by an actuator by means of at least one image acquisition device, comprising the following steps:
- the acquisition of image data (43) of the object (32) by means of at least one camera at several points of the path of motion (36),
**characterised by**:
- the obtaining of image analysis data (49) of the object (32) from the image data (43) using image analysing means (46), wherein the image analysis data (49) include at least one characteristic of the object (32) in at least one position along the path of motion (36), and
- the triggering of a consecutive reaction by the analysing means (46) if the at least one characteristic of the object (32) in the at least one position deviates by a preset amount from at least one preset characteristic (75, 76) assigned to that position, wherein the at least one characteristic of the object is a dynamic characteristic and the image analysis data include at least one dynamic characteristic of the object in at least one position along the path of motion, wherein the at least one dynamic characteristic of the object (32) comprises its speed and/or its acceleration.

## Revendications

1. Dispositif d'enregistrement d'image pour l'enregistrement d'un objet (32) déplacé par un actionneur (16, 17) le long d'une trajectoire de déplacement (36), comprenant :
- des moyens d'enregistrement pour la coopération avec au moins une caméra pour l'enregistrement de données d'image (43) de l'objet (32) sur plusieurs positions de la trajectoire de déplacement (36),
- des moyens d'analyse (46) pour déterminer des données d'analyse d'image (49) de l'objet (32) à l'aide des données d'image (43), les données d'analyse d'image (49) contenant au moins une propriété de l'objet (32) sur au moins une position le long de la trajectoire de déplacement (36), les moyens d'analyse (46) étant conçus pour déclencher une réaction consécutive lorsque la au moins une propriété de l'objet (32) diverge d'une valeur prédéfinie sur la au moins une position par rapport à au moins une propriété de spécification (75, 76) attribuée à la position, **caractérisé en ce que** la au moins une propriété de l'objet est une propriété dynamique, et les données d'analyse d'image contiennent au moins une propriété dynamique de l'objet sur au moins une position le long de la trajectoire de déplacement, la au moins une propriété dynamique de l'objet (32) comprenant sa vitesse et/ou son accélération.

2. Dispositif d'enregistrement d'image selon la revendication 1, **caractérisé en ce que** la réaction consécutive comprend une génération d'un message d'avertissement et/ou d'un message d'alerte et/ou d'une variation de vitesse, d'au moins un dispositif déplaçant l'objet (32).

3. Dispositif d'enregistrement d'image selon la revendication 1 ou 2, **caractérisé en ce que** la au moins une propriété de spécification (75, 76) délimite au moins une bande de tolérance, lors du dépassement de laquelle la réaction consécutive est déclenchée.

4. Dispositif d'enregistrement d'image selon la revendication 3, **caractérisé en ce que** la au moins une bande de tolérance comprend une bande d'avertissement (57), pour laquelle la réaction consécutive est une génération d'un message d'avertissement (61), et/ou une bande d'alerte (79), pour laquelle la réaction consécutive est une génération d'un message d'alerte (77), et/ou une bande de réaction d'urgence (86), pour laquelle la réaction consécutive est une variation de vitesse d'un dispositif, en particulier un arrêt ou un positionnement du dispositif dans une position de sécurité.

5. Dispositif d'enregistrement d'image selon l'une des revendications précédentes, **caractérisé en ce qu'**il est programmable.

6. Dispositif d'enregistrement d'image selon l'une des revendications précédentes, **caractérisé en ce que** les moyens d'enregistrement sont conçus pour l'enregistrement de données de capteur (88).

7. Dispositif d'enregistrement d'image selon l'une des revendications précédentes, **caractérisé en ce que** les moyens d'analyse (46) sont conçus pour le déclenchement de la réaction consécutive en fonction d'au moins une autre condition.

8. Dispositif d'enregistrement d'image selon la revendication 7, **caractérisé en ce que** la au moins une autre condition comprend un écart d'une propriété de géométrie de l'objet (32) par rapport à une propriété de géométrie de spécification (75, 76).

9. Dispositif d'enregistrement d'image selon la revendication 7 ou 8, **caractérisé en ce que** la au moins une autre condition comporte un code d'identification (51) de l'objet (32).

10. Dispositif d'enregistrement d'image selon l'une des revendications 7 à 9, **caractérisé en ce que** les moyens d'analyse (46) sont conçus pour déterminer la au moins une autre condition à l'aide de données de capteur.

11. Dispositif d'enregistrement d'image selon l'une des revendications précédentes, **caractérisé en ce qu'**il présente des moyens de raccordement pour un dispositif de visualisation et/ou contient des moyens de visualisation (48).

12. Dispositif d'enregistrement d'image selon l'une des revendications précédentes, **caractérisé en ce que** la au moins une caméra forme un composant du dispositif d'enregistrement d'image (13) ou **en ce qu'**il est conçu comme la caméra.

13. Dispositif d'enregistrement d'image selon l'une des revendications précédentes, **caractérisé en ce que** la au moins une caméra est une caméra à vitesse élevée pour l'enregistrement d'au moins 45 images individuelles par seconde.

14. Dispositif d'enregistrement d'image selon l'une des revendications précédentes, **caractérisé en ce qu'**il est conçu pour la commande synchrone d'au moins une caméra externe (89).

15. Dispositif d'enregistrement d'image selon l'une des revendications précédentes, **caractérisé en ce qu'**il présente au moins une interface pour la communication avec un dispositif de commande principal.

16. Dispositif d'enregistrement d'image selon l'une des revendications précédentes, **caractérisé en ce qu'**il présente des moyens de commande pour la commande d'au moins un actionneur subordonné.

17. Dispositif d'enregistrement d'image selon l'une des revendications précédentes, **caractérisé en ce qu'**il présente des moyens de stockage (93) pour le stockage des données d'image (43).

18. Dispositif d'enregistrement d'image selon la revendication 17, **caractérisé en ce que** les moyens de stockage sont conçus pour le stockage de longue durée en fonction d'une condition de déclenchement.

19. Dispositif d'enregistrement d'image selon l'une des revendications précédentes, **caractérisé en ce qu'**il contient un code de programme pouvant être exécuté par processeur.

20. Moyen de stockage avec un dispositif d'enregistrement d'image selon la revendication 19.

21. Système de manipulation (10) comprenant au moins un dispositif d'enregistrement d'image selon l'une des revendications 1 à 19.

22. Procédé pour l'enregistrement d'un objet (32) déplacé par un actionneur le long d'une trajectoire de déplacement (36) au moyen d'au moins un dispositif d'enregistrement d'image, comprenant les étapes suivantes :
- enregistrement de données d'image (43) de l'objet (32) avec au moins une caméra sur plusieurs positions de la trajectoire de déplacement (36),
**caractérisé par**
- une détermination de données d'analyse d'image (49) de l'objet (32) à l'aide des données d'image (43) par des moyens d'analyse (46), les données d'analyse d'image (49) contenant au moins une propriété de l'objet (32) sur au moins une position le long de la trajectoire de déplacement (36), et
- un déclenchement d'une réaction consécutive par les moyens d'analyse (46), lorsque la au moins une propriété de l'objet (32) diverge d'une valeur prédéfinie sur la au moins une position par rapport à au moins une propriété de spécification (75, 76) attribuée à la position, la au moins une propriété de l'objet étant une propriété dynamique, et les données d'analyse d'image contenant au moins une propriété dynamique de l'objet sur au moins une position le long de la trajectoire de déplacement, la au moins une propriété dynamique de l'objet (32) comprenant sa vitesse et/ou son accélération.
